# EUROPÄISCHE PATENTSCHRIFT

(11) **EP 2 553 247 B1**
(45) Veröffentlichungstag und Bekanntmachung des Hinweises auf die Patenterteilung: **02.07.2014**
(21) Anmeldenummer: 11712539.3
(22) Anmeldetag: 31.03.2011
(51) Int. Cl.: F02D 41/34, F02D 41/22, G01D 5/244

(54) **SCHALTUNGSANORDNUNG UND VERFAHREN ZUR AUSWERTUNG VON SIGNALEN EINES KURBELWELLENSENSORS UND EINES NOCKENWELLENSENSORS EINER BRENNKRAFTMASCHINE**
CIRCUIT ARRANGEMENT AND METHOD FOR EVALUATING SIGNALS OF A CRANKSHAFT SENSOR AND OF A CAMSHAFT SENSOR OF AN INTERNAL COMBUSTION ENGINE
ENSEMBLE CIRCUIT ET PROCÉDÉ POUR ÉVALUER DES SIGNAUX PRODUITS PAR UN CAPTEUR DE VILEBREQUIN ET PAR UN CAPTEUR D'ARBRE À CAMES D'UN MOTEUR À COMBUSTION INTERNE

(30) Priorität: 31.03.2010 DE 102010003524
(43) Veröffentlichungstag der Anmeldung: 06.02.2013
(73) Patentinhaber: Robert Bosch GmbH, 70442 Stuttgart (DE)
(72) Erfinder: BOEHL, Eberhard, 72768 Reutlingen (DE)
(86) Internationale Anmeldenummer: PCT/EP2011/054997
(87) Internationale Veröffentlichungsnummer: WO 2011/121066

(56) Entgegenhaltungen:
- EP-A2- 1 327 761
- DE-A1- 10 204 196
- DE-A1-102006 000 049

## Beschreibung

### Stand der Technik

Die Erfindung geht aus von einem Verfahren nach der Gattung der unabhängigen Patentansprüche. Aus der DE 43 27 218 A ist bereits eine Schaltungsanordnung bzw. ein Verfahren zur Auswertung von Signalen eines Kurbelwellensensors und eines Nockenwellensensors bekannt, bei dem jeweils alternativ entweder das eine oder das andere Verfahren durchgeführt wird.

### Vorteile der Erfindung

Die erfindungsgemäße Schaltungsanordnung bzw. das erfindungsgemäße Verfahren haben den Vorteil, dass zumindest ein erster Schritt der Erfassung der Sensordaten sowohl für den Kurbelwellensensor wie auch für den Nockenwellensensor zeitgleich erfolgt. Es ist daher im laufenden Betrieb jederzeit möglich, von einer Berechnung aufgrund eines der Sensoren auf eine Berechnung aufgrund des anderen Sensors umzuschalten. Es muss dabei nicht erst der Eingang von neuen Sensorsignalen abgewartet werden. Es kann so eine sehr schnelle Umschaltung der Steuerung der Brennkraftmaschine bei einem Ausfall eines der Sensoren erfolgen. Weiterhin ist der dafür benötigte Zusatzaufwand sehr gering.

Besonders einfach werden die gespeicherten Zeiten zur Vorhersage eines in der Zukunft liegenden Zeitpunktes des Auftretens eines Sensorsignals verwendet, woraus sich besonders einfach Zählimpulse für einen Positionszähler 11 erzeugen lassen. Diese Schaltung kann besonders einfach als digital Phase-Lock-Loop ausgebildet sein. Weitere Verbeuerugen ergehen sich durch die Merkmale der abhängigen Patentansprüche. Die Umschaltung erfolgt aufgrund des Signals von Überwachungsmittein der Sensoren. Diese können beispielsweise normale Überwachungsfunktionen der Brennkraftmaschine mitnutzen.

### Zeichnungen

Ausführungsbeispiele der Erfindung sind in den Zeichnungen dargestellt und in der nachfolgenden Beschreibung näher erläutert. Es zeigen:
- Die Figur 1: einen Kurbelwellensensor und einen Nockenwellensensor,
- Figur 2: Signale des Kurbelwellensensors,
- Figur 3: Signale des Nockenwellensensors,
- Figur 4: Signale des Kurbelwellensensors in einer stärkeren zeitlichen Auflösung,
- Figur 5: Zählimpulse eines Positionszählers,
- Figur 6: erste Verfahrensschritte und
- Figur 7: weitere Verfahrensschritte des erfindungsgemäßen Verfahrens.

### Beschreibung des Ausführungsbeispiels

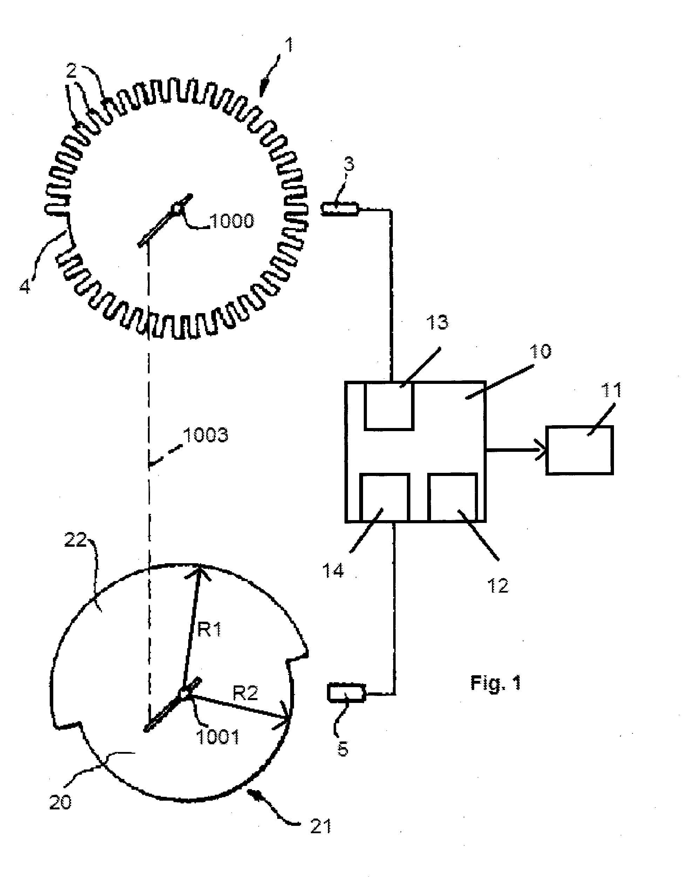

In der Figur 1 wird schematisch eine Kurbelwelle 1000 und eine Nockenwelle 1001 einer herkömmlichen Brennkraftmaschine gezeigt. Diese beiden Wellen sind durch den mechanischen Aufbau der Brennkraftmaschine starr miteinander gekoppelt, was in der Figur 1 durch die Verbindungslinie 1003 symbolisiert wird. Diese starre Kopplung bedeutet, dass es eine feste Beziehung zwischen der Nockenwelle und der Kurbelwelle gibt, wobei sich jedoch bei einer Umdrehung der Nockenwelle die Kurbelwelle um zwei Umdrehungen dreht. Die erfindungsgemäße Schaltungsanordnung bzw. das erfindungsgemäße Verfahren haben die Aufgabe, für die weiteren Berechnungen einer Motorsteuerung ein Positionssignal zur Verfügung zu stellen, welches eine Information über die jeweilige Stellung der Brennkraftmaschine, d. h. der Kurbelwelle 1000 und der Nockenwelle 1001 gibt. Die Auflösung dieses Signals ist dabei deutlich feiner als dies durch die in der Figur 1 gezeigten Einteilung auf den entsprechenden Geberrädern möglich ist. Die Kurbelwelle 1000 ist mit einem Kurbelwellengeberrad 1 verbunden. Das Kurbelwellengeberrad 1 weist auf seiner Außenseite eine Vielzahl von Zähnen 2 auf, die von einem Kurbelwellensensor 3 abgetastet werden. Der Kurbelwellensensor 3 weist jeweils einen ersten Signalpegel auf, beispielsweise ein High-Signal, wenn sich unmittelbar vor dem Kurbelwellensensor 3 ein Zahn befindet. Wenn sich unmittelbar vor dem Kurbelwellensensor 3 eine Zahnlücke, d. h. der Zwischenraum zwischen zwei Zähnen 2 befindet, so weist der Kurbelwellensensor 3 einen anderen Signalpegel, beispielsweise einen Low-Pegel auf. Der Kurbelwellensensor 3 liefert somit eine Folge von Rechteckimpulsen zwischen dem Low- und High-Pegel, durch welche die Bewegung der Zähne 2 des Kurbelwellengeberrades 1 und somit auch die Drehung der Kurbelwelle 1000 gemessen wird. Weiterhin ist eine Stelle des Kurbelwellengeberrades 1 besonders gekennzeichnet, indem mehrere Zähne 2 nicht vorgesehen sind. Diese Zahnlücke 4 bewirkt in dem Kurbelwellensensor 3 einen Low-Pegel für einen längeren Zeitbereich, wodurch eine Position der Kurbelwelle 1000 eindeutig gekennzeichnet ist.

Die Nockenwelle 1001 ist entsprechend mit einem Nockenwellengeberrad 20 verbunden. Das Nockenwellengeberrad 20 weist einen ersten Bereich 21 mit einem ersten Radius R1 auf. Weiterhin weist das Nockenwellengeberrad 20 einen zweiten Bereich 22 mit einem zweiten Radius R2 auf. R1 ist dabei deutlich größer als R2. Der erste Bereich 21 erstreckt sich über 180°, und der zweite Bereich 22 mit dem Radius R2 erstreckt sich ebenfalls über 180°. Wenn sich der erste Bereich 21 mit dem Radius R1 an dem Nockenwellengeber 5 vorbei bewegt, so gibt der Nockenwellengeber 5 ein Signal mit einem ersten Signalpegel, beispielsweise einem High-Signal-Pegel aus. Wenn sich der zweite Bereich 22 mit dem Radius R2 an dem Nockenwellengeber 5 vorbei bewegt, so gibt der Nockenwellengeber 5 ein Signal mit einem zweiten Pegel, beispielsweise einem Low-Pegel aus.

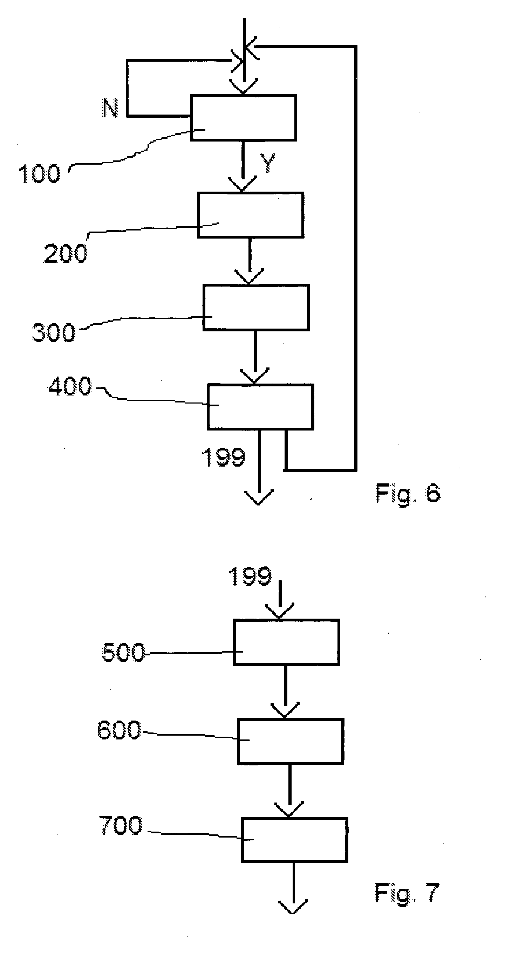

Die Signale des Kurbelwellensensors 3 und des Nockenwellensensors 5 werden zur weiteren Verarbeitung an eine Schaltungsanordnung 10 gegeben. Die Schaltungsanordnung 10 weist eine interne Uhr 12 und eine Schaltlogik 13 für die Auswertung der Signale des Kurbelwellensensors 3 und eine Schaltlogik 14 zur Auswertung der Signale des Nockenwellensensors 5 auf. Die Funktion dieser Schaltlogiken 13 und 14 wird weiter unten zur Figur 6 beschrieben. Die Schaltungsanordnung 10 erzeugt Positionsimpulse P die in einem Positionszähler 11 aufaddiert werden. Der Positionszähler 11 weist daher immer eine Information auf die der Stellung der Brennkraftmaschine, d.h. der Stellung der Kurbelwelle 1000 oder der Nockenwelle 1001 entspricht. Die weitere Verarbeitung innerhalb der Schaltungsanordnung 10 wird in den nachfolgenden Figuren näher erläutert.

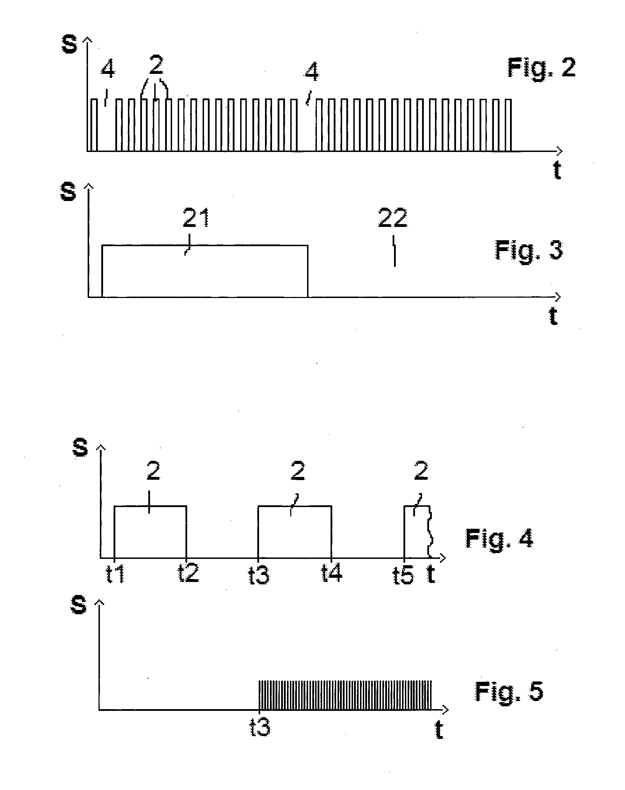

In der Figur 2 werden schematisch die Signale S des Kurbelwellensensors 3 gegen die Zeit t dargestellt. Schematisch dargestellt werden zwei Umdrehungen der Kurbelwelle 1000. Mit 2 werden die Signale der Zähne 2 und mit 4 wird das Signal der Zahnlücke 4 des Kurbelwellengeberrades 1 in der Figur 2 bezeichnet. Die Anzahl der gezeigten Impulse der Zähne 2 entsprechen nicht der Anzahl der Zähne, die in der Figur 1 dargestellt sind. Es handelt sich hier nur um eine schematische Darstellung dieses Signals. Bei realen Kurbelwellengeberrädern 1 werden beispielsweise 60-2 Zähne und eine Zahnlücke 4 von 2 Zähnen verwendet, so dass bei einer Umdrehung der Kurbelwelle 1000 58 Rechteckimpulse, wie sie in der Figur 2 gezeigt werden, auftreten. Durch die fehlenden Zähne der Zahnlücke 4 kann diese Zahnlücke sicher erkannt werden und durch Abzählen ab der Zahnlücke 4 kann bestimmt werden, welche Stellung die Kurbelwelle zum jeweiligen Zeitpunkt hat.

In der Figur 3 wird das Signal S des Nockenwellensensors 5 gegen die Zeit t gezeigt. Wie zu erkennen ist, weist das Signal einen sehr langen High-Pegel auf, so lange, wie sich das Segment 21 vor dem Nockenwellensensor 5 befindet. Den Rest der Umdrehung des Nockenwellengeberrades 20 ist der Signalpegel, wie in der Figur 3 gezeigt wird, auf dem Low-Pegel.

Die Signale des Kurbelwellensensors 3 bzw. des Nockenwellensensors 5 können nun jeweils genutzt werden, ein Positionssignal der Brennkraftmaschine zu berechnen. Dieses Positionssignal der Brennkraftmaschine wird für weitere Berechnungen benötigt, insbesondere für die Steuerung der Verbrennungsvorgänge der Brennkraftmaschine. Für derartige Verbrennungsvorgänge muss zu bestimmten Positionen der Brennkraftmaschine Aktoren, wie beispielsweise Kraftstoffeinspritzventile oder Zündspulen betätigt werden, wobei für eine präzise Ansteuerung dieser Vorgänge eine sehr genaue Information über die Position der Brennkraftmaschine notwendig ist.

In der Figur 4 und 5 wird die Berechnung eines hochpräzisen Positionssignals der Brennkraftmaschine aus den Signalen des Kurbelwellensensors 3 erläutert.

In der Figur 4 wird schematisch das Signal S des Kurbelwellensensors 3 gegenüber der Zeit t dargestellt. Die zeitliche Auflösung ist hier jedoch deutlich größer gewählt, so dass hier nur zwei Impulse von drei Zähnen 2 des Kurbelwellengeberrades 1 im Kurbelwellensensor 3 gezeigt werden. Zum Zeitpunkt t0 springt der Signalpegel des Signals S vom Low-Wert auf den High-Wert, und er behält diesen Signalpegel High bis zum Zeitpunkt t2 bei. In dem Zeitraum von t2 bis t3 bleibt der Signalpegel auf dem Low-Pegel, um dann vom Zeitpunkt t3 wieder auf den Wert High zu springen. Für die weitere Diskussion wird davon ausgegangen, dass die Schaltungsanordnung 10 nur die positiven Schaltflanken auswertet, d. h. nur die Signale auswertet, die von einem Low-Pegel auf den High-Pegel springen. Immer wenn der Signalpegel von einem Low-Pegel auf einen High-Pegel springt, speichert die Schaltungsanordnung 10 den Stand einer Zeituhr in einem Speicher. D. h. zum Zeitpunkt t1, t3 wird eine Zeit gespeichert. Aufgrund des Vergleichs dieser beiden Zeiten ermittelt die Schaltungsanordnung 10 dann, wie lange der Zeitraum zwischen den beiden positiven Signalflanken gedauert hat. Diese Information wird dann dazu genutzt, vorherzusagen, wie lange es dauert, bis die nächste positive Signalflanke, beispielsweise zum Zeitpunkt t5 eintrifft. Anhand der so vorhergesagten Zeitdauer bis zum Eintreffen der nächsten Signalflanke zum Zeitpunkt t5 wird dann, wie in der Figur 5 gezeigt wird, eine Vielzahl von einzelnen Positionssignalen P auszugeben. In der Figur 5 werden eine Vielzahl von Positionssignalen P gezeigt, die aber erst ab dem Zeitpunkt t3 ausgegeben werden. In dem Beispiel der Figuren 4 und 5 wird davon ausgegangen, dass zum Zeitpunkt t1 noch keine Berechnung des Positionssignals P möglich war, da zu diesem Zeitpunkt noch keine weiteren Informationen bezüglich der Drehung der Kurbelwelle 1000 vorlagen. Zum Zeitpunkt t3 kann erstmalig eine Vorhersage getroffen werden, wann mit dem nächsten Signal des Kurbelwellensensors 3 zu rechnen ist. Ab diesem Zeitpunkt wird entsprechend dieser Vorhersage, die sich nur auf die Messung des Zeitintervalls zwischen den Zeitpunkten t1 und t3 stützt, eine Vorhersage des Zeitintervalls bis zum nächsten Signal zum Zeitpunkt t5 des Kurbelwellensensors 3 möglich, und es wird entsprechend dieser Information eine Vielzahl von Positionsimpulsen P ausgegeben. Wie sich durch einen Vergleich der Figuren 4 und 5 unschwer ergibt, sind für zwei aufeinanderfolgende Signale des Kurbelwellensensors 3 eine Vielzahl von Positionsimpulsen P vorgesehen. Dies ermöglicht eine für den Zweck der Berechnung nachfolgende Aktionen sehr viel genauere Auflösungen der Winkelposition der Brennkraftmaschine, indem die Positionsimpulse P in einem Positionszähler gezählt werden. Der Positionszähler, der die Positionsimpulse P zählt, enthält daher intern immer einen Zählwert, der einer Stellung der Kurbelwelle 1000 entspricht. Dieser Wert des Positionszählers wird für die Ansteuerung von Aktoren, mit denen die Brennkraftmaschine betätigt wird, verwendet.

Zum Zeitpunkt t5 geht dann ein weiteres Signal des Kurbelwellensensors 3 ein, und es erfolgt zunächst wieder eine Speicherung des Zeitpunktes, zu dem diese positive Signalflanke eingeht. Zum Zeitpunkt t5 steht dann nicht nur die Information zur Verfügung, wie lang denn das Zeitintervall seit t3 verstrichen ist, sondern auch noch die Information, wie lang denn das Zeitintervall tl-t3 war. Es kann daher für die erneute Berechnung einer Vorhersage, wann das nächste Signal des Kurbelwellensensors 3 eintrifft, nicht nur das letzte Zeitintervall, sondern auch noch ein vorhergehendes Zeitintervall berücksichtigt werden. Dies bedeutet, dass nicht nur die aktuelle Drehzahl der Brennkraftmaschine, sondern auch eine eventuelle Beschleunigung oder Verlangsamung der Brennkraftmaschine berücksichtigt werden kann. Entsprechend dieser Information kann dann die Vorhersage des nächsten Intervalls bis zum Eintreffen der nächsten positiven Schaltflanke des Kurbelwellensensors 3 verbessert werden.

Weiterhin muss bezüglich des Zeitpunktes t5 noch angemerkt werden, dass natürlich festgestellt werden kann, inwieweit die Vorhersage der Zeitdauer zwischen den positiven Schaltflanken zwischen t3 und t5 zutreffend ist. Sofern es dabei zu Abweichungen gekommen ist, müssen evtl. zusätzliche Positionsimpulse P eingefügt werden oder aber es muss, nachdem eine vorgegebene Anzahl von Positionsimpulsen nach dem Zeitpunkt t3 ausgegeben wurde, die Ausgabe weiterer Positionsimpulse P gestoppt werden, bis die positive Schaltflanke t5 tatsächlich eintrifft. Es wird so sichergestellt, dass der Positionszähler immer die richtige Anzahl von Positionsimpulsen P und damit eine möglichst zutreffende Position der Brennkraftmaschine aufweist. Wichtig ist dabei, dass eine gemessene Position der Brennkraftmaschine immer nur zu den Zeitpunkten der positiven Schaltflanke des Kurbelwellensensors 3 zur Verfügung steht, d. h. in der Figur 4 zu den Zeitpunkten t1, t3 und t5. Zwischen diesen Zeitpunkten werden die Positionsimpulse P und damit der Stand des Positionszählers 11 durch eine Berechnung gebildet, die jedoch insbesondere wenn eine Änderung der Drehzahl der Brennkraftmaschine über mehrere Zähne 2 des Kurbelwellengeberrades 1 hinweg ausgewertet wird, eine recht genaue Information der realen Position der Brennkraftmaschine enthält.

Alternativ zu der Berechnung aufgrund des Signals des Kurbelwellensensors 3 kann die Berechnung natürlich auch aufgrund des Signals des Nockenwellensensors 5 erfolgen. Wie sich jedoch unschwer durch einen Vergleich der Figuren 2 und 3 erkennen lässt, hat das Signal des Kurbelwellensensors 3 von vorneherein eine genauere Auflösung, da das Kurbelwellengeberrad 1 eine sehr viel feinere Unterteilung als das Nockenwellengeberrad 20 aufweist. Bei dem Signal des Nockenwellengebers 5, wie es bei der Figur 3 gezeigt wird, würde nicht nur die positive Schaltflanke des Signals, sondern auch die negative Schaltflanke des Signals, d. h. der Übergang vom High-Level zum Low-Level ausgewertet werden. Es steht somit für eine Umdrehung der Nockenwelle 1001 zwei Signale zur Verfügung, die eine reale gemessene Position der Nockenwelle beinhalten. Zwischen diesen beiden Messpunkten müsste dann durch entsprechende Berechnungen Positionsimpulse P und ein entsprechender Stand des Positionszählers 11 erzeugt werden. Da weniger gemessene Informationen über die Position der Nockenwelle zur Verfügung stehen, ist jedoch der Stand des Positionszählers mit einer deutlich größeren Unsicherheit behaftet.

In der Figur 6 werden die internen Bearbeitungsschritte zur Verarbeitung der Signale des Kurbelwellensensors 3 bzw. des Nockenwellensensors 5 dargestellt. In einem ersten Programmblock 100 wird überprüft, ob eine positive Schaltflanke eines Signals des Kurbelwellensensors 3 eingegangen ist. Wenn festgestellt worden ist, dass eine positive Schaltflanke, d. h. ein Pegelwechsel von einem Low-Pegel zu einem High-Pegel eingegangen ist, so folgt auf den Schritt 100 der Schritt 200. Wenn keine positive Schaltflanke festgestellt wurde, so folgt auf den Schritt erneut der Schritt 100, d. h. der Programmblock 100 wartet so lange, bis eine positive Schaltflanke des Nockenwellensensorsignals festgestellt wurde. Zur Feststellung erfolgt eine entsprechende Vorfilterung und Entprellung des Signals des Nockenwellensensors 3, um sicher festzustellen, dass es sich tatsächlich um ein Signal des Kurbelwellensensors 3 handelt, welches durch das Vorbeistreichen eines Zahns 2 des Nockenwellengeberrades 1 verursacht ist. Diese Vorverarbeitung der Signale kann entweder durch analoge Schaltmittel, aber auch digital durch einfache Analog-Digital-Wandlung des Signals des Kurbelwellensensors 3 erfolgen.

Weiterhin kann im Schritt 100 auch überprüft werden, ob das Signal des Kurbelwellensensors 3 auch in einem plausiblen Zeitfenster erfolgt ist, da aufgrund der Drehung der Brennkraftmaschine üblicherweise in einem Bereich zwischen 800 und 6000 Umdrehungen pro Minute nur ein bestimmter Zeitbereich für die Aufeinanderfolge von Zähnen 2 am Kurbelwellensensor 3 möglich ist. Wenn ein entsprechendes sinnvolles Signal des Kurbelwellensensors 3 festgestellt wurde, so folgt auf den Schritt 100 der Schritt 200.

In dem Schritt 200 wird eine Zeitinformation, beispielsweise von der internen Uhr 12, die dem Zeitpunkt des Eingehens der positiven Schaltflanke entspricht, ermittelt. Dieser Wert wird dann in einem nachfolgenden Schritt 300 in einem Speicher abgelegt. Das Ablegen in einem Speicher erfolgt dabei so, dass in dem Speicher die Zeitpunkte, zu dem mehrere Signale des Kurbelwellensensors 3 eingegangen sind, verfügbar sind. Durch das Abspeichern von mehreren Zeitpunkten, zu denen Signale des Kurbelwellensensors 3 eingegangen sind, lässt sich die weitere Drehzahl der Kurbelwelle 1000 mit großer Zuverlässigkeit vorhersagen. Je mehr Zeitpunkte des Eintreffens von Signalen des Kurbelwellensensors 3 bekannt sind, umso besser lässt sich die Entwicklung der Drehung der Kurbelwelle 1000 vorhersagen. Wenn nur die Zeitpunkte des gerade eingegangenen Zahns 2 und des vorhergehenden Zahns 2 bekannt sind, so kann die Vorhersage keine Beschleunigung der Brennkraftmaschine berücksichtigen. Wenn noch ein vorhergehender Zeitpunkt des Eintreffens eines Signals des Kurbelwellensensors 3 bekannt ist, so kann auch eine Beschleunigung oder Verlangsamung der Drehzahl der Brennkraftmaschine berücksichtigt werden. Wenn eine Vielzahl von Zeitpunkten bekannt sind, können auch andere Schwankungen der Drehzahl, beispielsweise durch die Kompression von Zylindern oder aufgrund von sonstigen Schwingungserscheinungen der Brennkraftmaschine oder eines damit betriebenen Kraftfahrzeugs vorhergesagt werden.

Die Ablage der Zeitpunkte des Eintreffens der Signale des Kurbelwellensensors 3 kann beispielsweise so erfolgen, dass in einem Speicher für jeden Zahn 2 des Kurbelwellengeberrades 1 ein Speicherplatz vorgesehen ist, so dass bei laufendem Betrieb immer die Zeitpunkte des Eintreffens der Kurbelwellensensorsignale für eine komplette Umdrehung der Kurbelwelle 1000 im Speicher enthalten ist. Da ein Betriebszyklus der Brennkraftmaschine jedoch zwei Kurbelwellenumdrehungen umfasst, ist es auch möglich, zwei komplette Umdrehungen der Kurbelwelle bezüglich der Zeitpunkte des Vorbeistreichens der Zähne 2 am Nockenwellensensor 3 im Speicher vorzusehen oder gegebenenfalls noch weitere Umdrehungen. Alternativ ist es auch möglich, weniger Speicherplatz vorzusehen, beispielsweise nur 10 Speicherplätze und somit nur die Zeitpunkte der letzten zehn Zähne 2 im Speicher vorzusehen. In diesem Fall wäre dann nicht ein Speicherplatz einem bestimmten Zahn zugeordnet, sondern es würde bei jedem Speichervorgang ein Zähler erhöht, der angibt, auf welchem Speicherplatz die letzte Einspeicherung erfolgte, so dass für die nachfolgenden Berechnungen klar ist, welche gespeicherten Zeitpunkte welchen vorhergehenden Zähnen 2 entspricht.

Auf den Speicherschritt 300 folgt ein Berechnungsschritt 400, in dem zusätzlich zu den Zeitpunkten des Eintreffens der Signale des Kurbelwellensensors 3 jeweils die Differenzen zu dem vorhergehenden Signal gespeichert werden. Diese Informationen werden für nachfolgende Berechnungen benötigt. Weiterhin wird im Schritt 400 ein Triggersignal 199 für nachfolgende Berechnungen, die in der Figur 7 beschrieben werden, ausgelöst. Ansonsten folgt auf den Schritt 400 wieder der Schritt 100, d. h. es wird auf das Eintreffen des nächsten Signals des Kurbelwellensensors 3 gewartet.

Die Programmschritte 100 bis 400 werden entsprechend für die Auswertung des Nockenwellensensors 5 durchlaufen. Der einzigste Unterschied besteht darin, dass der Schritt 100 nicht nur positive Schaltflanken, d. h. den Signalwechsel vom Low-Pegel zum High-Pegel, sondern auch negative Schaltflanken, d. h. vom High-Pegel zum Low-Pegel auswertet. Dies liegt darin begründet, dass der Nockenwellensensor 5 aufgrund der in der Figur 3 gezeigten Signalfolge pro Umdrehung der Nockenwelle relativ wenig Signale liefert und daher jede mögliche Schaltflanke ausgewertet wird.

Erfindungsgemäß ist nun vorgesehen, dass das Verfahren nach der Figur 6 sowohl für die Signale des Kurbelwellensensors 3 wie auch für die Signale des Nockenwellensensors 5 kontinuierlich ausgeführt wird. D. h. immer wenn ein Signal des Kurbelwellensensors 3 und ein Signal des Nockenwellensensors 5 eingeht, wird das Verfahren der Schritte 100 bis 400 durchlaufen. Die Ausführung dieser Verfahrensschritte kann wie in der Figur 1 gezeigt wird durch entsprechende Schaltlogiken 13, 14 kontinuierlich ausgeführt werden. Die Schaltlogiken 13, 14 arbeiten als fest verdrahtete Schaltung die Verfahrensschritte 100 - 400 ab, d.h. eine Erkennung einer Schaltflanke, Abspeicherung des Wertes der inneren Uhr 12 und Berechnung der Differenzen zu vorhergehenden Schaltflanken. Die Schritte 100 - 400 können aber auch komplett oder teilweise durch ein Programm ausgeführt werden, wobei jedoch eine Ausführung durch Hardware bevorzugt wird. Es werden also kontinuierlich Zeitpunkte abgespeichert, die dem Eintreffen von Signalen des Kurbelwellensensors 3 entsprechen und parallel dazu werden kontinuierlich Signale abgespeichert, die dem Eintreffen von Signalen des Nockenwellensensors 5 entsprechen. Das Abspeichern dieser Werte erfolgt unabhängig davon, welches dieser Signale für die Berechnung der Positionsimpulse bzw. des Standes des Positionszählers 11 verwendet wird. In dem Speicher der Schaltungsanordnung sind somit immer eine ausreichende Anzahl von Messwerten des Kurbelwellensensors 3 und des Nockenwellensensors 5 enthalten, um jederzeit zwischen diesen beiden Verfahren umzuschalten. Dies ist insbesondere für Störungen eines der beiden Sensoren von Bedeutung. Wenn beispielsweise der Kurbelwellensensor 3 ausfällt und keine Messwerte des Nockenwellensensors 5 gespeichert sind, so muss erst eine komplette Umdrehung der Nockenwelle abgewartet werden, bis überhaupt eine Berechnung aufgrund des Nockenwellensensorsignals vorgenommen werden kann. Erfindungsgemäß wird daher vorgeschlagen, dass kontinuierlich eine Speicherung der Zeitpunkte des Eintreffens von Schaltflanken der Kurbelwellensensoren 3 bzw. Nockenwellensensoren 5 erfolgt, so dass zu jedem Zeitpunkt eine Umschaltung zwischen diesen beiden unterschiedlichen Sensorsignalen für die Berechnung der Positionsimpulse P bzw. des Standes des Positionszählers 11 möglich ist.

In der Figur 7 wird-die weitere Verarbeitung der in den Schritten 200 bis 400 gespeicherten Zeitpunkte des Eintreffens von Signalen des Kurbelwellensensors 3 bzw. Nockenwellensensors 5 gezeigt. Ausgehend von dem Triggersignal 199 erfolgt ein erster Bearbeitungsschritt 500, in dem bestimmt wird, ob eine Berechnung aufgrund des Kurbelwellensignals oder aufgrund des Nockenwellensignals möglich ist. Alternativ kann natürlich auch in dem Schritt 400 die Erzeugung des Triggersignals 199 davon abhängen, ob jetzt die Berechnung aufgrund des Kurbelwellensignals oder des Nockenwellensignals gewünscht ist. Auf den Schritt 500 folgt dann der Schritt 600, in dem die entsprechenden gespeicherten Zeitpunkte der vorhergehenden Signale des Kurbelwellensensors 3 oder des Nockenwellensensors 5 erfolgen. Aufgrund dieser Zeitpunkte und Zeitdifferenzen erfolgt dann eine Berechnung der Drehzahl der Brennkraftmaschine und eine Vorhersage, wann das nächste Signal des Sensors zu erwarten ist. Entsprechend der so berechneten Zeitdauer wird eine entsprechende Frequenz für die Ausgabe der Positionsimpulse P gezählt, so dass bis zum Eintreffen des nächsten Signals eine entsprechende Anzahl von Positionsimpulsen P erzeugt sind und somit ein entsprechender Stand des Positionszählers 11 bewirkt wird. Die Anzahl der Positionsimpulse P muss dabei natürlich angepasst werden, ob jetzt die Berechnung aufgrund des Signals des Kurbelwellensensors 3 oder des Nockenwellensensors 5 erfolgt. Aufgrund des größeren Winkelbereichs bis zum Eintreffen des nächsten Nockenwellensignals muss bei einer Berechnung aufgrund des Nockenwellensignals eine entsprechende größere Anzahl von Positionsimpulsen ausgegeben werden.

## Patentansprüche

1. Schaltungsanordnung (10) zum Auswerten von Signalen eines Kurbelwellensensors (3) und eines Nockenwellensensors (5) einer Brennkraftmaschine, wobei die Zeitpunkte, zu denen die Signale auftreten, ausgewertet werden, wobei aus den Zeitpunkten ein Positionssignal (11) einer Welle der Brennkraftmaschine gebildet wird, wobei Speicherungsmittel (13, 14) vorgesehen sind, die gleichzeitig die Zeitpunkte (t1, t3, t5) des Auftretens der Signale des Kurbelwellensensors (3) und die Zeitpunkte des Auftretens von Signalen des Nockenwellensensors (5) speichern, und wobei Entscheidungsmittel vorgesehen sind, die entscheiden, ob das Positionssignal (11) aus den Zeitpunkten des Auftretens der Signale des Kurbelwellensensors (3) oder aus den Zeitpunkten des Auftretens der Signale des Nockenwellensensors (5) gebildet werden, wobei Mittel zur Bildung des Positionssignals (11) vorgesehen sind, die die gespeicherten Zeitpunkte des Auftretens des Signals des Kurbelwellensensors (3) oder des Nockenwellensensors (5) verwenden, um einen in der Zukunft liegenden Zeitpunkt des Auftretens eines Signals des Kurbelwellensensors (3) oder des Nockenwellensensors (5) vorherzusagen und dass die Berechnungsmittel eine Vielzahl von Zählimpulsen P erzeugen, die aufsummiert das Positionssignal (11) bilden **dadurch gekennzeichnet, dass** die Berechnungsmittel als digitale Phase-Locked-Loop DPLL ausgebildet sind.

2. Schaltungsanordnung nach Anspruch 1, **dadurch gekennzeichnet, dass** Überwachungsmittel (500) vorgesehen sind, die den Kurbelwellensensor (3) und den Nockenwellensensor (5) auf ihre ordnungsgemäße Funktion überwachen und die in Abhängigkeit von dieser Überwachung entscheiden, ob die Berechnung des Positionssignals (11) aufgrund der Signale des Kurbelwellensensors (3) oder des Nockenwellensensor (5) vorgenommen wird.

3. Schaltungsanordnung nach Anspruch 1, **dadurch gekennzeichnet, dass** eine Schaltlogik (13) zur Auswertung der Signale des Kurbelwellensensors (3) vorgesehen ist, die die Zeitpunkte des Eintreffens der Signale des Kurbelwellensensors (3) in einem Speicher der Schaltungsanordnung veranlasst und dass weiterhin eine Schaltlogik (14) zur Auswertung der Signale des Nockenwellensensors (5) vorgesehen ist, die eine Speicherung der Zeitpunkte des Eintreffens der Signale des Nockenwellensensors (5) in einem Speicher der Schaltungsanordnung (10) vornimmt.

4. Verfahren zum Auswerten von Signalen eines Kurbelwellensensors (3) und eines Nockenwellensensors (5) einer Brennkraftmaschine, wobei die Zeitpunkte, zu denen die Signale auftreten, ausgewertet werden, wobei aus den Zeitpunkten ein Positionssignal (11) einer Welle der Brennkraftmaschine gebildet wird, wobei Speicherungsmittel (13, 14) gleichzeitig die Zeitpunkte (t1, t3, t5) des Auftretens der Signale des Kurbelwellensensors (3) und die Zeitpunkte des Auftretens von Signalen des Nockenwellensensors (5) speichern und dass Entscheidungsmittel entscheiden, ob das Positionssignal (11) aus den Zeitpunkten des Auftretens der Signale des Kurbelwellensensors (3) oder aus den Zeitpunkten des Auftretens der Signale des Nockenwellensensors (5) gebildet werden, wobei zur Bildung des Positionssignals (11) die gespeicherten Zeitpunkte des Auftretens des Signals des Kurbelwellensensors (3) oder des Nockenwellensensors (5) verwendet werden, um einen in der Zukunft liegenden Zeitpunkt des Auftretens eines Signals des Kurbelwellensensors (3) oder des Nockenwellensensors (5) vorherzusagen und wobei eine Vielzahl von Zählimpulsen P erzeugt werden, die aufsummiert das Positionssignal (11) bilden **dadurch gekennzeichnet, dass** die Bildung der Zählimpulse P durch eine digitale Phase-Locked-Loop DPLL erfolgt.

5. Verfahren nach Anspruch 4, **dadurch gekennzeichnet, dass** der Kurbelwellensensor (3) und der Nockenwellensensor (5) auf ihre ordnungsgemäße Funktion überwacht werden und in Abhängigkeit von dieser Überwachung entschieden wird, ob die Berechnung des Positionssignals (11) aufgrund der Signale des Kurbelwellensensors (3) oder des Nockenwellensensor (5) vorgenommen werden.

## Claims

1. Circuit arrangement (10) for evaluating signals of a crankshaft sensor (3) and of a camshaft sensor (5) of an internal combustion engine, wherein the times at which the signals occur are evaluated, wherein a position signal (11) of a shaft of the internal combustion engine is formed from the times, wherein storage means (13, 14) are provided which simultaneously store the times (t1, t3, t5) of occurrence of the signals of the crankshaft sensor (3) and the times of occurrence of signals of the camshaft sensor (5), and wherein decision means are provided which decide whether the position signal (11) is formed from the times of occurrence of the signals of the crankshaft sensor (3) or from the times of occurrence of the signals of the camshaft sensor (5), wherein means for forming the position signal (11) are provided, which means use the stored times of occurrence of the signal of the crankshaft sensor (3) or of the camshaft sensor (5) in order to predict a future time of occurrence of a signal of the crankshaft sensor (3) or of the camshaft sensor (5), and in that the calculation means generate a multiplicity of counting pulses (P) which form the position signal (11) when summed, **characterized in that** the calculation means are embodied as a digital phase locked loop DPLL.

2. Circuit arrangement according to Claim 1, **characterized in that** monitoring means (500) are provided which monitor the crankshaft sensor (3) and the camshaft sensor (5) for their satisfactory function and which decide, as a function of this monitoring, whether the calculation of the position signal (11) is performed on the basis of the signals of the crankshaft sensor (3) or of the camshaft sensor (5).

3. Circuit arrangement according to Claim 1, **characterized in that** a switching logic (13) for evaluating the signals of the crankshaft sensor (3) is provided, which switching logic (13) causes the times of arrival of the signals of the crankshaft sensor (3) to be stored in a memory of the circuit arrangement, and **in that** furthermore a switching logic (14) for evaluating the signals of the camshaft sensor (5) is provided, which switching logic (14) stores the times of arrival of the signals of the camshaft sensor (5) in a memory of the circuit arrangement (10).

4. Method for evaluating signals of a crankshaftsensor (3) and of a camshaft sensor (5) of an internal combustion engine, wherein the times at which the signals occur are evaluated, wherein a position signal (11) of a shaft of the internal combustion engine is formed from the times, wherein storage means (13, 14) simultaneously store the times (t1, t3, t5) of occurrence of signals of the crankshaft sensor (3) and the times of occurrence of signals of the camshaft sensor (5), and in that decision means decide whether the position signal (11) is formed from the times of occurrence of the signals of the crankshaft sensor (3) or from the times of occurrence of the signals of the camshaft sensor (5), wherein the stored times of occurrence of the signal of the crankshaft sensor (3) or of the camshaft sensor (5) are used to form the position signal (11) in order to predict a future time of occurrence of a signal of the crankshaft sensor (3) or of the camshaft sensor (5), wherein a multiplicity of counting pulses P are generated which form the position signal (11) when summed, **characterized in that** the counting pulses P are formed by means of a digital phase locked loop DPLL.

5. Method according to Claim 4, **characterized in that** the crankshaft sensor (3) and the camshaft sensor (5) are monitored for their satisfactory functioning, and it is decided as a function of this monitoring whether the calculation of the position signal (11) is performed on the basis of the signals of the crankshaft sensor (3) or of the camshaft sensor (5).

## Revendications

1. Arrangement de circuit (10) pour analyser les signaux d'un capteur de vilebrequin (3) et d'un capteur d'arbre à cames (5) d'un moteur à combustion interne, les instants auxquels se produisent les signaux étant analysés, un signal de position (11) d'un arbre du moteur à combustion interne étant formé à partir des instants, des moyens de mise en mémoire (13, 14) étant prévus, lesquels mettent simultanément en mémoire les instants (t1, t3, t5) auxquels se produisent les signaux du capteur de vilebrequin (3) et les instants auxquels se produisent les signaux du capteur d'arbre à cames (5), et des moyens de décision étant prévus, lesquels décident si le signal de position (11) est formé à partir des instants auxquels se produisent les signaux du capteur de vilebrequin (3) ou à partir des instants auxquels se produisent les signaux du capteur d'arbre à cames (5), des moyens de formation du signal de position (11) étant prévus, lesquels utilisent les instants mis en mémoire auxquels se produit le signal du capteur de vilebrequin (3) ou le signal du capteur d'arbre à cames (5) afin de prévoir un instant se situant dans l'avenir auquel se produit un signal du capteur de vilebrequin (3) ou un signal du capteur d'arbre à cames (5), et les moyens de calcul générant une pluralité d'impulsions de comptage P qui, additionnées, forment le signal de position (11), **caractérisé en ce que** les moyens de calcul sont réalisés sous la forme d'une boucle à verrouillage de phase numérique DPLL.

2. Arrangement de circuit selon la revendication 1, **caractérisé en ce que** sont prévus des moyens de surveillance (500), lesquels surveillent le bon fonctionnement du capteur de vilebrequin (3) et du capteur d'arbre à cames (5) et, en fonction de cette surveillance, décident si le calcul du signal de position (11) sera effectué en se basant sur les signaux du capteur de vilebrequin (3) ou du capteur d'arbre à cames (5).

3. Arrangement de circuit selon la revendication 1, **caractérisé en ce qu'**il est prévu une logique de commutation (13) pour analyser les signaux du capteur de vilebrequin (3), laquelle amène les instants auxquels se produisent les signaux du capteur de vilebrequin (3) à être mis en mémoire dans une mémoire de l'arrangement de circuit, et **en ce qu'**il est en outre prévu une logique de commutation (14) pour analyser les signaux du capteur d'arbre à cames (5), laquelle effectue une mise en mémoire dans une mémoire de l'arrangement de circuit (10) des instants auxquels se produisent les signaux du capteur d'arbre à cames (5).

4. Procédé pour analyser les signaux d'un capteur de vilebrequin (3) et d'un capteur d'arbre à cames (5) d'un moteur à combustion interne, les instants auxquels se produisent les signaux étant analysés, un signal de position (11) d'un arbre du moteur à combustion interne étant formé à partir des instants, des moyens de mise en mémoire (13, 14) mettant simultanément en mémoire les instants (t1, t3, t5) auxquels se produisent les signaux du capteur de vilebrequin (3) et les instants auxquels se produisent les signaux du capteur d'arbre à cames (5), et des moyens de décision décidant si le signal de position (11) est formé à partir des instants auxquels se produisent les signaux du capteur de vilebrequin (3) ou à partir des instants auxquels se produisent les signaux du capteur d'arbre à cames (5), les instants mis en mémoire auxquels se produit le signal du capteur de vilebrequin (3) ou le signal du capteur d'arbre à cames (5) étant utilisés pour former le signal de position (11) afin de prévoir un instant se situant dans l'avenir auquel se produit un signal du capteur de vilebrequin (3) ou un signal du capteur d'arbre à cames (5) et une pluralité d'impulsions de comptage P étant générées qui, additionnées, forment le signal de position (11), **caractérisé en ce que** la formation des impulsions de comptage P est effectuée par une boucle à verrouillage de phase numérique DPLL.

5. Procédé selon la revendication 4, **caractérisé en ce que** le bon fonctionnement du capteur de vilebrequin (3) et du capteur d'arbre à cames (5) est surveillé et, en fonction de cette surveillance, il est décidé si le calcul du signal de position (11) sera effectué en se basant sur les signaux du capteur de vilebrequin (3) ou du capteur d'arbre à cames (5).
